# EUROPÄISCHE PATENTSCHRIFT

(11) **EP 0 626 701 B1**
(45) Veröffentlichungstag und Bekanntmachung des Hinweises auf die Patenterteilung: **25.08.1999**
(21) Anmeldenummer: 94103468.8
(22) Anmeldetag: 08.03.1994
(51) Int. Cl.: H01B 5/10

(54) **Elektrisches Leiterseil für Hochspannungsfreileitungen**
Electrical conductor strand for high voltage overhead lines
Toron conducteur électrique pour lignes aériennes à haute tension

(30) Priorität: 30.03.1993 DE 4310301
(43) Veröffentlichungstag der Anmeldung: 30.11.1994
(73) Patentinhaber: ALCATEL, 75008 Paris (FR)
(72) Erfinder: Hög, Georg, Dipl.-Ing., D-41065 Mönchengladbach (DE); Hannen, Lutz, Dipl.-Ing., D-41238 Mönchengladbach (DE)
(74) Vertreter: Döring, Roger, Dipl.-Ing.

(56) Entgegenhaltungen:
- EP-A- 0 443 085
- GB-A- 2 084 757
- PATENT ABSTRACTS OF JAPAN vol. 2, no. 61 (E-78) (1703) 9. Mai 1978 & JP-A-53 024 582 (HITACHI DENSEN) 3. Juli 1978

## Beschreibung

Die vorliegende Erfindung betrifft ein elektrisches Leiterseil für Hochspannungsfreileitungen zur gleichzeitigen Energie- und Nachrichtenübertragung gemäß dem Oberbegriff des Patentanspruchs 1 mit mindestens einer Lage aus metallischen Drähten, die um ein optische Fasern enthaltendes zentrales Metallrohr verseilt sind. Ein solches Leiterseil ist aus der GB-A-2 084 757 bekannt.

Bei einem bekannten Leiterseil der gattungsgemäßen Art (DE-OS 34 46 766) sind die optischen Fasern im Zentrum des Leiterseiles durch ein hochzugfestes, hochdruckfestes und schwingungsfestes Kunststoffmaterial mit einer Zugfestigkeit von wengistens 700 N/mm² umhüllt, um das herum die metallischen Leiterdrähte verseilt sind. Dabei sind die optischen Fasern selbst um eine Kunststoff-Trense gewickelt, wobei die Umhüllung aus dem Kunststoffmaterial lose auf dem aus den Fasern und der Trense gebildeten Faserbündel aufliegt. Abgesehen davon, daß in neuerer Zeit immer mehr die Forderung gestellt wird, wegen der im Kurzschlußfall auftretenden erhöhten Temperaturen auch im Leiterseil von beispielsweise 160° C und darüber, Kunststoffmaterialien im Leiterseil zu vermeiden, wird bei der bekannten Anordnung der optischen Fasern die Dehnungsreserve im Falle der Zugbelastung des Leiterseiles nur durch die Schlaglänge erreicht, mit der die optischen Fasern auf der zentralen Trense aufgewickelt sind. Nach Erschöpfung der Dehnungsreserve unter Zugbeanspruchung steigt die Faserdämpfung erheblich an, Übertragungsschwierigkeiten sind so vorprogrammiert.

Hinzu kommt, daß bei dem bekannten Leiterseil die verwendete Kunststoffumhüllung bei Aufbringung von Schellen und Armaturen zur Montage des Leitungsseiles nicht ausreicht, die dabei auftretende Querdruckbelastung von den optischen Übertragungselementen fernzuhalten und damit die geforderten Übertragungseigenschaften der optischen Fasern zu gewährleisten.

In einem anderen bekannten Fall (EP-A-0 443 085) werden zum Schutz von in einem Verseilverband von elektrischen Drähten mitgeführten optischen Fasern diese durch ein Metallröhrchen geschützt, das einen oder mehrere Drähte einer Verseillage ersetzt. Die Überlänge der Fasern wird hier durch die jeweilige Schlaglänge der Drahtlage bestimmt.

Bekannt ist es auch bereits (Patent Abstracts of Japan, Vol. 2, No. 61 (E-78) (1703) 9. Mai 1978; JP-A-53-24582), bei einem gattungsgemäßen Leiterseil ebenfalls Metallröhrchen im Verseilverband zu verwenden, wobei dann, wenn diese Röhrchen einen oder mehrere Drähte einer Verseillage ersetzen, die Überlänge der Fasern durch die Schlaglänge der Einzeldrähte der jeweiligen Verseillage bestimmt ist. Für den Fall, daß ein Metallröhrchen als zentrales Element im Verseilverband verwendet ist, verspricht die Verseilung der Fasern im Metallröhrchen miteinander eine gewisse Überlänge, mit den Gefahren, die eine Verseilung optischer Fasern unmittelbar mit sich bringt.

Der vorliegenden Erfindung liegt, ausgehend von diesem Stand der Technik, daher die Aufgabe zugrunde, bei einem elektrischen Leiterseil für Hochspannungsfreileitungen die für die Datenübertragung vorgesehenen optischen Fasern so anzuordnen, daß bei der Einwirkung äußerer mechanischer Kräfte, wie Zug- und Druckkräfte, Dämpfungserhöhungen praktisch nicht auftreten und auch bei erhöhten Temperaturen, etwa im Kurzschlußfall, diese sich nicht nachteilig au die Datenübermittlung auswirken.

Gelöst wird diese Aufgabe gemäß Anspruch 1 der Erfindung dadurch, daß das zentrale Metallrohr den gleichen äußeren Durchmesser mindestens wie die einzelnen Drähte der unmittelbar angrenzenden Lage aufweist und die optischen Fasern in diesem Metallrohr mit einer Überlänge > 5 ‰, bezogen auf die Rohrlänge im Herstellungszustand, ohne Aufwicklung oder Aufseilung auf Trägern im Rohrinnern lose angeordnet sind. Diese Ausbildung des elektrischen Leiterseiles mit gleichzeitiger Energie- und Nachrichtenübertragung führt zu einer deutlichen Herabsetzung der Querdruckbelastung auf die optischen Fasern, in dem zentrisch angeordneten Metallrohr sind die optischen Fasern auch gegen erhöhte Temperatureinwirkung sicher geschützt. Vor allem aber hat sich gezeigt, daß bei der erfindungsgemäßen Lösung mit der losen Anordnung der optischen Fasern bei einer Überlänge von mehr als 5 ‰ und Dehnung der Faser unter Zugspannung nach Auslastung der theoretischen Faserreserven die Dämpfungsänderung nur sehr gering ausfällt, für den praktischen Betrieb des Leiterseiles also vernachlässigt werden kann.

Zwar ist es bereits bekannt (DE-GM 87 05 548.1), im Aufbau eines elektrischen Freileiterseiles mit integrierten Lichtwellenleitern ein Metallrohr vorzusehen, das die optischen Fasern enthält, dieses bekannte Metallrohr ist jedoch anstelle eines Drahtes in eine unterhalb der obersten Lage befindliche Drahtlage miteingeseilt. Damit ergibt sich aber wieder das bereits erwähnte Problem, daß bei verseilten optischen Fasern deren Dehnungsreserve nur durch die Schlaglänge erreicht wird, nach Erschöpfung dieser so vorgegebenen Dehnungsreserve unter Zugbeanspruchung aber die Faserdämpfung beträchtlich ansteigt. Solche bekannten Freileiterseile mit im Verseilverband angeordneten Metallrohren und darin befindlichen optischen Fasern tragen damit nichts zu der der Erfindung zugrundeliegenden Aufgabe bei.

Das die optischen Fasern aufnehmende Metallrohr besteht vorteilhaft aus einem längseinlaufenden, zum Rohr geformten und an den Kanten verschweißten Metallband geeigneter Banddicke von z. B. 0,1 bis 0,4 mm Dicke. Diese Ausbildung des Metallrohres erlaubt eine besonders kostengünstige Herstellung in beliebigen Längen, wobei während des Herstellungsverfahrens beispielsweise durch unterschiedliche Steuerung der Bandzufuhr sowie der Einlaufgeschwindigkeit der optischen Faser deren geforderte Überlänge einstellbar ist. Eine andere Möglichkeit, die benötigte Überlänge während des Herstellungsprozesses einzustellen, ist beispielsweise die, daß nach einem bekannten Verfahren das längseinlaufende Metallband vor oder während der Rohrformung erwärmt wird, wobei die bei der Erwärmung erfolgende Ausdehnung des Metallbandes eine Relativbewegung zu den gleichzeitig einlaufenden optischen Fasern bewirkt. Nach dem Verschweißen des Rohres und seiner Abkühlung auf Raumtemperatur liegen dann die optischen Fasern in einer querdruckstabilen und temperaturbeständigen Umhüllung. Bei Zugbelastung erfolgt eine Dehnung der Faser lediglich in Achsrichtung, die hierbei auftretenden Dämpfungsänderungen sind praktisch vernachlässigbar.

Die einzelnen Drähte heute üblicher elektrischer Leiterseile bestehen teils aus Stahl, um die für solche Seile notwendige Zugfestigkeit zu gewährleisten, teils aus Aluminium, um die geforderten Stromübertragungseigenschaften sicherzustellen. Immer häufiger geht man auch dazu über, aus den beiden genannten Werkstoffen kombinierte Drähte zu wählen, insbesondere auch, um die Korrosionsanfälligkeit der Leiterseile herabzusetzen. Hier bieten sich beispielsweise aluminiumummantelte Stahldrähte in besonders vorteilhafter Weise an.

In dem gemäß der Erfindung als Kernstrang verwendeten Metallrohr sind die optischen Fasern, was z. B. die Querdruckstabilität betrifft, besonders geschützt, wenn dieses Metallrohr ein Stahlrohr ist. Solchen Rohren wird man deshalb zur Lösung der der Erfindung zugrundeliegenden Aufgabe den Vorzug geben. Ein zusätzlicher Schutz dieses Stahlrohres, aber auch jeder anderen Metallrohre, beispielsweise auch aus Aluminium, ergibt sich in Weiterführung der Erfindung dann, wenn die Drähte der unmittelbar an das Metallrohr angrenzenden Lage einander gewölbeartig abstützen. Dies führt zu einer zusätzlichen Entlastung des zentral in Längsrichtung geführten Metallrohres, wenn von außen mechanische Kräfte wirksam werden. Diese gegenseitige Abstützung der einzelnen Drähte der innersten Lage läßt sich beispielsweise durch eine entsprechende Verseilung oder Aufseilung herbeiführen. So werden bei entsprechender Bedeckung des zentrisch geführten Metallrohres durch die darüber angeordnete Drahtlage unter Zugbeanspruchung des Leiterseiles die einzelnen Drähte gegeneinander gepreßt und bilden somit ein zweites Rohr oberhalb des zentrischen Metallrohres zum Schutz der in dem Kernrohr befindlichen optischen Fasern.

Für die problemlose Datenübertragung über die in dem für die Energieübertragung dienenden Leiterseil kommt es, wie bereits angedeutet, auch darauf an, daß die optischen Fasern vor der Einwirkung erhöhter Temperaturen geschützt sind. Dem trägt die Erfindung dadurch Rechnung, daß keinerlei Kunststoffe den Aufbau des Leiterseiles bestimmen sowie das Metallröhrchen im Zentrum des Leiterseiles angeordnet ist.

Für die Betriebssicherheit des erfindungsgemäßen Leiterseiles ist ferner von Bedeutung, daß Korrosionserscheinungen im Leiterseil entgegengewirkt wird. Zu diesem Zweck sind in Weiterführung des Erfindungsgedankens mindestens die Drähte der den als Metallrohr ausgebildeten Kernstrang unmittelbar umgebenden Drahtlage mit einer hitzebeständigen Fettung versehen. Diese hitzebeständige Fettung kann zusätzlich noch korrosionshemmende Ionentauscher enthalten.

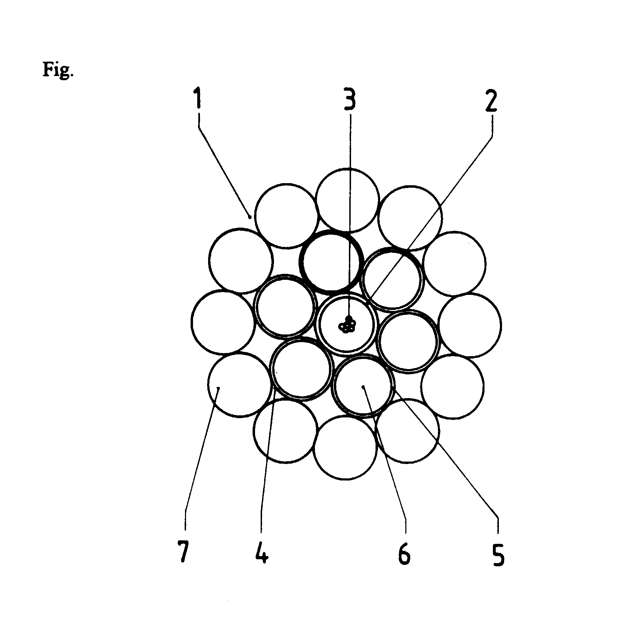

Die Erfindung sei anhand des als Ausführungsbeispiel in der Figur dargestellten zweilagigen elektrischen Leiterseiles zur gleichzeitigen Energie- und Nachrichtenübertragung näher erläutert.

Im Zentrum des Leiterseiles 1 angeordnet und längs laufend in Achsrichtung geführt ist das Stahlröhrchen 2, in dem lose mit einer Überlänge von mehr als 5 ‰ optische Fasern 3 geführt sind. Diese aus dem Stahlröhrchen 2 und den optischen Fasern 3 bestehende sogenannte Stahlbündelfaser hat einen äußeren Durchmesser, der mindestens gleich dem Durchmesser der einzelnen Drähte 4 in der unmittelbar anschließenden Drahtlage ist. Im dargestellten Ausführungsbeispiel sind diese Drähte 4 mit einer Aluminiumschicht 5 ummantelte Stahldrähte 6. Die Schlaglänge der Drähte 4 dieser innersten Lage ist so gewählt, daß bei weitgehend 100 %iger Bedeckung des Stahlröhrchens 2 die Drähte 4 unter Zugbeanspruchung ein Schutzrohr durch eine gewölbeartige Abstützung gegeneinander bewirken. Damit sind die in dem Stahlröhrchen 2 angeordneten optischen Fasern gegen äußere mechanische Einwirkung gleich mehrfach geschützt. Dieser Schutz gilt auch gegen im Kurzschlußfall auftretende erhöhte Temperaturen des Leiterseiles.

Die an die innerste Lage aus den aluminiumplattierten Stahldrähten anschließende Lage aus den Drähten 7 sieht Aluminiumdrähte vor oder solche aus einer für Leiterseile üblichen Aluminiumlegierung.

Die Erfindung ist selbstverständlich nicht auf das in der Figur dargestellte zweilagige Leiterseil beschränkt. Beliebige Konstruktionen von Erdseilluftkabeln, Phasenseilen und dergl. mit optischen Fasern sind ebenso möglich wie von dem Ausführungsbeispiel abweichende Materialkombinationen für die den Kernstrang umgebenden Einzeldrähte der jeweiligen Drahtlagen. In jedem Fall ist jedoch der Kernstrang ein Metallrohr, in dem die optischen Fasern lose mit Überlänge geführt sind, lose bedeutet u. a. auch, daß im Gegensatz zu bekannten Konstruktionen die optischen Fasern nicht auf Trägern aufgeseilt oder aufgewickelt sind, denn dies würde bedeuten, daß die durch die erfindungsgemäße Lösung gerade vermiedene Dämpfungserhöhung bei Zugbeanspruchung nicht gewährleistet ist.

## Patentansprüche

1. Elektrisches Leiterseil (1) für Hochspannungsfreileitungen zur gleichzeitigen Energie- und Nachrichtenübertragung mit mindestens einer Lage aus metallischen Drähten (4), die um ein optische Fasern (3) enthaltendes zentrales Metallrohr (2) verseilt sind, dadurch gekennzeichnet, daß das zentrale Metallrohr (2) den gleichen äußeren Durchmesser mindestens wie die einzelnen Drähte (4) der unmittelbar angrenzenden Lage aufweist und daß die optischen Fasern (3) in diesem Metallrohr (2) mit einer Überlänge > 5 ‰, bezogen auf die Rohrlänge im Herstellungszustand, ohne Aufwicklung oder Aufseilung auf Trägern im Rohrinnern lose angeordnet sind.

2. Leiterseil nach Anspruch 1, dadurch gekennzeichnet, daß das Metallrohr (2) ein Stahlrohr ist.

3. Leiterseil nach Anspruch 1 oder 2, dadurch gekennzeichnet, daß die Drähte (4) der unmittelbar an das Metallrohr (2) angrenzenden Lage einander gewölbeartig abstützen.

4. Leiterseil nach Anspruch 1 oder einem der folgenden, dadurch gekennzeichnet, daß die das Metallrohr unmittelbar umgebende Drahtlage (4) aus aluminiumummantelten Stahldrähten (6) besteht.

5. Leiterseil nach Anspruch 1 oder einem der folgenden, dadurch gekennzeichnet, daß mindestens die Drähte (4) der das Metallrohr (2) unmittelbar umgebenden Drahtlage mit einer hitzebeständigen Fettung versehen sind.

6. Leiterseil nach Anspruch 5, dadurch gekennzeichnet, daß das hitzebeständige Fett zusätzlich korrosionshemmende Ionentauscher enthält.

## Claims

1. Electrical stranded conductor (1) for high-voltage-free cabling for simultaneous power and data transmission with at least one layer of metal wires (4) which are twisted around a central metallic tube (2) containing an optical fibre (3), characterised in that the central metal tube (2) has the same external diameter at least as the individual wires (4) of the immediately adjacent layer and that the optical fibres (3) are loosely arranged within this metal tube (2) with an excess length > 5 ‰ based on the length of the tube in the manufactured state, without winding or twisting on carriers.

2. Stranded conductor in accordance with Claim 1, characterised in that the metal tube (2) is a steel tube.

3. Stranded conductor in accordance with Claim 1 or 2, characterised in that the wires (4) in the layer immediately bordering on the metal tube (2) support one-another in an arched manner.

4. Stranded conductor in accordance with Claim 1 or one of the subsequent claims characterised in that the layer of wire (4) immediately surrounding the metal tube consists of aluminium-wrapped steel wires (6).

5. Stranded conductor in accordance with Claim 1 or one of the subsequent claims characterised in that at least the wires (4) of the wire layer immediately surrounding the metal tube (2) are provided with a heat-resistant lubricant.

6. Stranded conductor in accordance with Claim 5, characterised in that the heat-resistant lubricant also contains a corrosion-inhibiting ion-exchanger.

## Revendications

1. Câble conducteur (1) pour lignes aériennes de haute tension destiné simultanément au transport de courant et à la transmission de données avec au moins une couche de brins de câble métalliques (4), toronnés sur une gaine métallique centrale (2) contenant des fibres optiques (3), ce câble est caractérisé par le fait que la gaine métallique centrale (2) possède au moins le même diamètre extérieur que les différents brins de câble constituant la couche la plus proche et par le fait que les fibres optiques (3) sont montées libres dans la gaine métallique (2) avec une surlongueur de > 5 %o par rapport à la longueur de la gaine au moment de la fabrication et sans enroulement ou toronnage sur une âme support.

2. Câble conducteur suivant l'objet de brevet d'invention 1, caractérisé par le fait que la gaine métallique (2) est en acier.

3. Câble conducteur suivant les objets de brevet d'invention 1 ou 2, caractérisé par le fait que les brins de câble (4) de la couche la plus proche de la gaine métallique (2) pressés les uns contre les autres constituent une couche de protection en forme de voûte.

4. Câble conducteur suivant l'objet de brevet d'invention 1 ou l'un des suivants, caractérisé par le fait que la couche de brins de câble (4) la plus proche de la gaine métallique (2) est constituée par des brins d'acier (6) gainés d'un manteau d'aluminium.

5. Câble conducteur suivant l'objet de brevet d'invention 1 ou l'un des suivants, caractérisé par le fait que au moins les brins de câble (4) de la couche la plus proche de la gaine métallique (2) comportent une couche de graisse isotherme.

6. Câble conducteur suivant l'objet de brevet d'invention 1, caractérisé par le fait que la graisse isotherme contient, en supplément, des échangeurs d'ions pour le blocage de la corrosion.
